# EUROPÄISCHE PATENTSCHRIFT

(11) **EP 1 177 873 B1**
(45) Veröffentlichungstag und Bekanntmachung des Hinweises auf die Patenterteilung: **11.12.2002**
(21) Anmeldenummer: 00116771.7
(22) Anmeldetag: 03.08.2000
(51) Int. Cl.: B29C 44/30, B29C 33/36, B29C 33/30

(54) **Dichtkettenwechsel bei Doppelbandanlagen für Plattenmaterial**
Changing side seal chains on double belt mould lines
Changement de bande-joint pour le moulage continu entre deux bandes

(43) Veröffentlichungstag der Anmeldung: 06.02.2002
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- DE-A- 3 227 414
- DE-C- 19 744 049
- GB-A- 952 742

## Beschreibung

Die vorliegende Erfindung bezieht sich auf ein Verfahren zum Wechseln von Dichtketten an Doppelbandanlagen.

Solche Doppelbandanlagen sind Stand der Technik und werden bei der Herstellung von plattenartigen Materialien verwendet. In den Doppelbandanlagen laufen zumindest ein oberes und zumindest ein unteres Band in einem definierten Abstand zueinander synchron entlang einer bestimmten Strecke, so daß die Plattenmaterialien zwischen den Bändern durchgeführt werden. Dabei sind die Plattenmaterialien in ihrer Höhe auf den Abstand der Bänder begrenzt. Üblicherweise ist die Doppelbandanlage mit einer Heizung versehen, so daß in den Plattenmaterialien bestimmte physikalische oder chemische Vorgänge unter Temperatureinwirkung ablaufen.

Ein typisches Beispiel ist die Herstellung von Sandwichelementen aus oberen Deckschichten und unteren Deckschichten mit dazwischenliegenden Schaummaterialien. Hier läßt man die Schaummaterialien, die zuvor auf die unteren Deckschichten aufgetragen worden sind, nach Auflegen der oberen Deckschicht in einer Doppelbandanlage ausreagieren, wobei sich durch die Heizung eine schnelle und gründliche Reaktion des Schaummaterials ergibt. Ferner kann das Schaummaterial die beiden Deckschichten nicht über den durch die Doppelbandanlage definierten Abstand hinaus auseinander treiben. Die Erfindung ist jedoch nicht auf dieses spezielle Beispiel eingeschränkt.

Bei solchen Doppelbandanlagen finden Dichtketten Anwendung, die mit den Bändern seitlich mitlaufen, um eine gewisse Abgrenzung oder auch Abdichtung des Durchlaufkanals für die Plattenmaterialien zur Seite hin zu bewirken. Dabei sind in der Regel nach beiden Seiten Dichtketten vorgesehen. Diese Dichtketten können beispielsweise das Auslaufen noch nicht verfestigten Schaummaterials an den Längsseiten vermeiden, wenn die in der Doppelbandanlage hergestellten Sandwichelemente keine entsprechenden Rahmenseitenteile aufweisen. Dabei können die Dichtketten mit einem auf die gewünschte Seitenform der Sandwichelemente angepaßten Profil ausgebildet sein.

Üblicherweise bestehen solche Dichtketten aus einer Gliederkette aus metallischem Werkstoff, wobei die einzelnen Glieder mit Formblöcken versehen sind, die in geradem Zustand der Dichtkette eine im wesentlichen dichtschließende, langgestreckte Kontur mit der gewünschten Kantenform bilden. Diese Formblöcke können bei Bedarf von den Sandwichelementen durch Wachse, Trennpapier oder dergleichen abgetrennt werden. Zudem können die Dichtketten weitere Aufgaben, z.B. der seitlichen Führung von Blechdeckschichten und Mineralwollfüllungen in der Doppelbandanlage erfüllen.

Wenn in einer Doppelbandanlage unterschiedliche Sandwichelemente produziert werden, so müssen die Dichtketten gelegentlich ausgewechselt werden. Z.B. kann dies erforderlich sein, wenn die Seitenprofilform der Sandwichelemente verändert wird. Häufig sind die Dichtketten zudem zwischen einem oberen und einem unteren Band der Doppelbandanlage angeordnet, so daß durch eine Verschiebung der Dichtketten mit ihrer Antriebsmechanik bzw. einem Teil davon quer zur Transportrichtung der Doppelbandanlage auf unterschiedliche Breiten der Sandwichelemente Rücksicht genommen werden kann. Dann ist aber auch klar, daß die Dichtkettenhöhe bzw. die Höhe der Formblöcke der Sandwichelementhöhe angepaßt sein muß. Also wird bei einer Veränderung der Höhe der zu produzierenden Sandwichelemente (oder anderen Plattenmaterialien) eine Anpassung durch Wechsel der Dichtkette(n) notwendig sein. In einigen Fällen ist vorgesehen, daß die Metallgliederkette in solchen Fällen mit anderen Formblöcken versehen werden kann. Auch um diesen Wechsel der Formblöcke bequem vornehmen zu können und um einen unnötig langen Stillstand der Doppelbandanlage zu vermeiden, empfiehlt es sich, die Dichtkette aus der Doppelbandanlage zu entnehmen.

Bei dem Wechsel von Dichtketten, den diese Erfindung zum Gegenstand hat, wird konventionellerweise eine in der Doppelbandanlage eingebaute Dichtkette, die im folgenden als erste Dichtkette bezeichnet wird, geöffnet. Dazu dient im allgemeinen ein Kettenschloß zwischen den Metallgliedern. Die geöffnete erste Dichtkette kann dann aus der Doppelbandanlage herausgeführt werden. Eine andere Dichtkette, im folgenden als zweite Dichtkette bezeichnet, wird daraufhin in die Doppelbandanlage eingeführt.

Stand der Technik bilden beispielsweise die DE 32 27 414 A1 sowie die DE 197 44 049 C1, die jeweils den Wechsel von Dichtketten in Doppelbandanlagen beschreiben. Dabei wird zuerst die in der Doppelbandanlage befindliche Dichtkette motorisch herausgefahren und in einem Dichtkettenmagazin untergebracht. Aus einem anderen Platz in dem Dichtkettenmagazin wird dann eine andere Dichtkette entnommen und in zu dem Herausfahren der vorherigen Dichtkette umgekehrter Weise wieder in die Doppelbandanlage eingebracht. Beide Schriften beschäftigen sich mit Einzelheiten des jeweiligen Dichtkettenmagazins. Der Oberbegriff des Anspruchs 1 beruht auf diesem Stand der Technik.

Dieser Erfindung liegt das technische Problem zugrunde, ein verbessertes Verfahren für diesen Dichtkettenwechsel anzugeben.

Erfindungsgemäß ist hierzu vorgesehen ein Verfahren zum Wechseln von Dichtketten einer Doppelbandanlage für Plattenmaterialien, bei dem eine erste Dichtkette in der Doppelbandanlage geöffnet wird und eine zweite Dichtkette anstelle der ersten Dichtkette in die Doppelbandanlage eingeführt wird, dadurch gekennzeichnet, daß ein Ende der zweiten Dichtkette mit einem Kettenschloß direkt an einem Ende der ersten Dichtkette befestigt wird und die zweite Dichtkette während des Herausführens der ersten Dichtkette aus der Doppelbandanlage in die Doppelbandanlage eingeführt wird.

Vorteilhafte Ausgestaltungen sind in den abhängigen Ansprüchen angegeben.

Weiterhin bezieht sich die Erfindung auch auf eine an das Verfahren angepaßte Doppelbandanlage. Daher gilt, daß die Offenbarung der einzelnen Merkmale in der nachfolgenden Beschreibung einschließlich der Ausführungsbeispiele sowohl im Hinblick auf die Verfahrenskategorie als auch im Hinblick auf die Vorrichtungskategorie zu verstehen ist.

Der wesentliche Grundgedanke der Erfindung liegt darin, daß die in der Doppelbandanlage eingebaute erste Dichtkette nach dem Öffnen an einem Ende der für die erste Dichtkette einzuführenden zweiten Dichtkette direkt befestigt wird. Mit dieser Formulierung ist dabei gemeint, daß zwar zwischen einem Ende der geöffneten Dichtkette und dem zugeordneten anderen Ende der zweiten Dichtkette ein Kettenschloß vorgesehen sein kann, dieses Kettenschloß jedoch eine im Verhältnis zu der Länge der Dichtketten unwesentliche Ausdehnung aufweisen soll. Das Kettenschloß soll also im Verhältnis zu den Dichtketten in seiner Länge nicht ins Gewicht fallen, die Gesamtlänge der aneinandergekoppelten ersten und zweiten Dichtketten insgesamt also im wesentlichen der Summe der jeweiligen Dichtkettenlängen entsprechen. Im übrigen fällt unter den Begriff "Kettenschloß" im Sinn der Erfindung jede zum Verbinden der Dichtketten geeignete Vorrichtung.

Damit grenzt sich die Erfindung ab von der konventionellen Praxis, bei der an einem Ende der geöffneten ersten Dichtkette ein Seil befestigt wurde. Die erste Dichtkette aus der Doppelbandanlage herausgezogen wurde, woraufhin mit Unterstützung des Seiles, das an einem Ende der anderen zweiten Dichtkette befestigt wurde, die zweite Dichtkette in die Doppelbandanlage hineingezogen wurde. Bei dieser Vorgehensweise traten also erhebliche Seillängen auf, weil das Seil nach dem Herausziehen der ersten Dichtkette durch die gesamte Doppelbandanlage hindurchreichen mußte.

Bei der Erfindung wird nun eine vergleichsweise direkte Kopplung zwischen den beiden Dichtketten hergestellt. Dadurch ist es möglich, aus dem Herausführen der ersten Dichtkette aus der Doppelbandanlage und dem Einführen der zweiten Dichtkette in die Doppelbandanlage einen einheitlichen Arbeitsvorgang zu machen. Tatsächlich wirken die beiden Dichtketten nämlich während dieses Arbeitsvorganges wie eine einzige durchgehende Dichtkette, die vorteilhafterweise möglichst durchgehend homogen gestaltet sein sollte. Daraus ergibt sich, daß nach dem Herausführen der ersten Dichtkette die zweite Dichtkette bereits eingeführt ist.

Die Erfindung bietet somit zunächst eine wesentliche Zeitersparnis im Dichtwechselvorgang und damit eine spürbare Verkürzung der Ausfallzeit der Doppelbandanlage. Zum einen folgt dies aus der Tatsache, daß die beim Dichtkettenwechsel beim Durchziehen einer Dichtkette durch die Doppelbandanlage zurückgelegte Strecke wesentlich verkürzt, d.h. praktisch halbiert wird. Zum zweiten folgt dies daraus, daß sich bei der direkten Verbindung der beiden Dichtketten miteinander im Vergleich zu der Verbindung durch ein langes loses Seil auch relativ homogene Übergänge schaffen lassen, die das Durchführen gegenüber dem Einführen der an dem Seil hängenden zweiten Dichtkette wesentlich erleichtern. Bei einer günstigen Ausgestaltung des Übergangs zwischen den Dichtketten entfällt praktisch das Neueinfädeln.

Schließlich läßt sich das Verfahren nun so gestalten, daß im Grunde ein Arbeitsschritt wegfällt, nämlich das Verbinden eines Seilendes mit einer Kette, wenn man das Verbinden des anderen Seilendes mit der anderen Kette als mit dem Verbinden der beiden Ketten miteinander äquivalent betrachtet. Dies setzt jedoch voraus, daß zur Verbindung der beiden Ketten miteinander ein Kettenschloß einer der beiden Ketten verwendet wird, das bereits an der ersten oder der zweiten Kette befestigt ist. Zum einen kann dies das Kettenschloß sein, mit dessen Hilfe die erste Dichtkette geöffnet wurde. Zum zweiten kann dies auch ein an der zweiten Dichtkette hängendes Kettenschloß sein, weil die zweite Dichtkette im allgemeinen in geöffnetem Zustand gelagert wird. Die Verwendung eines solchen Kettenschlosses schafft auch einen besonders homogenen Übergang und stellt somit ein bevorzugtes (wenngleich kein notwendiges) Merkmal der Erfindung dar.

Ferner ist bevorzugt, daß ein (bzw. das) zum Verbinden der beiden Dichtketten verwendete Kettenschloß eine Kettenteilungslänge aufweist. Dies ist bei den Kettenschlössern, mit denen die Dichtketten in Betrieb geschlossen werden, gewöhnlich der Fall. Selbst wenn aus bestimmten Gründen zum Verbinden der beiden Dichtketten ein anderes Kettenschloß verwendet werden sollte, sollte dieses vorzugsweise in seiner Längenausdehnung einer Kettenteilung entsprechen.

Eine weitere Ausgestaltung der Erfindung sieht vor, daß die Doppelbandanlage ein Dichtkettenmagazin für nicht in der Doppelbandanlage in Betrieb befindliche Dichtketten aufweist. In diesem Dichtkettenmagazin wird die zweite Dichtkette vor dem Dichtkettenwechsel und die erste Dichtkette nach dem Dichtkettenwechsel gelagert. Natürlich kann das Dichtkettenmagazin auch noch weitere lagernde Dichtketten enthalten.

Das Dichtkettenmagazin kann ausgeführt sein als eine Ablagefläche, die in der Höhe auf die Lage einer in die Doppelbandanlage eingeführten Dichtkette abgestimmt ist. Damit wird ermöglicht, die Dichtketten, die in der Regel nur um vertikale Achsen beweglich sind, im wesentlichen auf einem Höhenniveau von dem Dichtkettenmagazin in die Doppelbandanlage einzuführen bzw. aus der Doppelbandanlage heraus auf das Magazin zu führen.

Gemäß einer besonderen Ausgestaltung des erfindungsgemäßen Verfahrens werden die Dichtketten in dem Dichtkettenmagazin spiralförmig aufgewickelt. In dieser Weise können die Dichtketten besonders platzsparend untergebracht werden. Dazu kann das Dichtkettenmagazin kreisförmige Ablageplatten aufweisen, und zwar vorteilhafterweise zumindest zwei für eine mit Dichtketten zu bestückende Seite der Doppelbandanlage, bei beidseitigen Dichtketten, also vier Plattenablageflächen. Eine der jeweils zwei Plattenablageflächen kann dann die zweite Dichtkette vor dem Dichtkettenwechsel tragen, während die erste Dichtkette beim Dichtkettenwechsel auf die andere Plattenablagefläche aufgewickelt wird.

Dabei ist vorzugsweise vorgesehen, daß die spiralförmig aufgewickelten Dichtketten vor einem erneuten Einsatz in der Doppelbandanlage umgespult werden. Dies kann beispielsweise von einer der beiden Plattenablageflächen auf die andere geschehen. Man kann natürlich auch eine Platte mit daraufliegender Dichtkette entnehmen und auf einer anderen Vorrichtung die Dichtkette umspulen. Der Zweck dieser Vorgehensweise liegt daran, daß neu einzuführende Dichtketten dann immer den gleichen Drehsinn aufweisen. Dies ist bei nicht oben/untensymmetrischen Dichtketten notwendig, weil diese nicht einfach umgedreht werden können. Wenn die Dichtketten vor dem Einführen einen einheitlichen Drehsinn haben, so können sie immer in der Transportrichtung der Doppelbandanlage eingeführt werden, wobei die herauszuführende Dichtkette dementsprechend auch in der Transportrichtung transportiert wird. Das hat den Vorteil, daß man die Bänder der Doppelbandanlage dabei mitlaufen lassen kann, um durch Relativbewegungen zwischen den Bändern und den Dichtketten verursachte kleinere Beschädigungen der Bänder zu vermeiden. Hierbei ist anzumerken, daß ein Rückwärtsbetrieb bei einer Doppelbandanlage in der Regel kein zulässiger Betriebszustand ist.

Solche Schäden können ansonsten dadurch auftreten, daß die Dichtkette zwischen den Bändern liegt und bei einer Verstellung der Plattenmaterialien quer zur Transportrichtung verstellt wird. Dann können bei Relativbewegungen zwischen Dichtkette und Bändern erzeugte Laufspuren und Kratzer auf den Bändern bei späterer Herstellung breiterer Plattenmaterialien auf diesen zu "Abbildungen" und damit Qualitätseinbußen führen. Natürlich kann der Transportmechanismus der Dichtketten in der Doppelbandanlage bei diesem Dichtkettenwechsel als Antrieb für den Dichtkettenwechsel und für ein gleichzeitiges Mitlaufen der Bänder verwendet werden.

Ein Umspulen kann allerdings dann entfallen, wenn die erwähnten Beschädigungen kein Problem darstellen, z.B. weil die Dichtkette nicht zwischen den Bändern liegt, oder wenn die an zwei Seiten einer Doppelbandanlage verwendeten Dichtketten zueinander symmetrisch sind. Dann können die herausgeführten Dichtketten seitenvertauscht werden, bevor sie wieder verwendet werden. Jedoch vergrößert sich die kritische Stillstandszeit der Doppelbandanlage beim Dichtkettenwechsel auch dann nicht, wenn tatsächlich umgespult wird, weil das Umspulen parallel zum Produktionsbetrieb der Doppelbandanlage ablaufen kann.

Bei einer weiteren Ausgestaltung der Erfindung ist vorgesehen, daß die erste Dichtkette zu einem Dichtkettenwechsel zunächst nur zu einem Teil ihrer Länge herausgeführt wird, dann an einem weiteren Kettenschloß geöffnet wird und dann ein weiterer Teil ihrer Länge herausgeführt wird. Dies kann auch fortgesetzt werden, um die Dichtkette in zwei, drei oder mehr Teilstücke unterteilt herauszuführen. In der Dichtkette müssen natürlich dementsprechend angeordnete Kettenschlösser vorgesehen sein. Hierdurch ist es möglich, die Teilstücke zu lagern und damit Schwierigkeiten mit der Lagerung einer vollständigen Dichtkette zu vermeiden.

Von besonderem Vorteil ist dies dann, wenn die Teilstücke der Dichtketten nebeneinander liegend in dem Dichtkettenmagazin gelagert werden, und zwar vorzugsweise gerade ausgestreckt nebeneinander liegend. Wenn bei einer solchen Lagerung die Dichtkette in einem Stück auftreten würde, so würde dies ein Dichtkettenmagazin notwendig machen, das in seiner Baulänge deutlich größer als die ohnehin schon erhebliche Länge der Doppelbandanlage ist. Tatsächlich sind jedoch die baulichen Verhältnisse in den Produktionsanlagen häufig beschränkt und bilden die Doppelbandanlagen aufgrund ihrer langgestreckten Bauform ohnehin schon ein Raumproblem.

Wenn die Dichtkette jedoch in beispielsweise drei Teilstücke zerlegt gelagert wird, kann sie durchaus gerade oder auch etwas gekrümmt, jedoch langgestreckt gelagert werden. Dadurch entfällt das oben beschriebene Umspulen.

Ein vorteilhaftes Dichtkettenmagazin weist hierzu langgestreckte nebeneinander liegende Magazinfächer für die Dichtkettenteilstücke auf. Dabei kann eines der Fächer überzählig sein und einen Rücklaufkanal für die in Betrieb befindliche, d.h. in der Doppelbandanlage eingeführte und mitlaufende Dichtkette bilden. Wie das Ausführungsbeispiel näher verdeutlicht, lassen sich dadurch sehr praktische Lösungen bei kompakter Bauform realisieren. Das als Rücklaufkanal dienende Fach muß natürlich nicht immer das selbe Fach sein. Es kann einfach das Fach verwendet werden, das gerade frei ist, wenn gegenüber der Teilstückzahl der einzulagernden Dichtkette(n) ein überzähliges Fach vorhanden ist.

Im folgenden werden zwei Ausführungsbeispiele der Erfindung im einzelnen erläutert. Dabei offenbarte Einzelmerkmale können auch in anderen als den dargestellten Kombinationen erfindungswesentlich sein.

Im einzelnen zeigt:
Fig. 1 eine erfindungsgemäße Doppelbandanlage nach einem ersten Ausführungsbeispiel in Draufsicht;
Fig. 2 eine in Transportrichtung dargestellte Aufrißansicht eines Teils der Doppelbandanlage aus Fig. 1;
Fig. 3 eine Draufsicht auf eine erfindungsgemäße Doppelbandanlage gemäß einem zweiten Ausführungsbeispiel;
Fig. 4 a - f jeweils eine Ausschnittsdarstellung zur Fig. 3, wobei ein Dichtkettenmagazin in verschiedenen Betriebszuständen dargestellt ist;
Fig. 5 eine erfindungsgemäße Kopplung zwischen zwei Dichtketten 5 in einer ersten Variante;
und Fig. 6 eine solche Kopplung nach einer zweiten Variante.

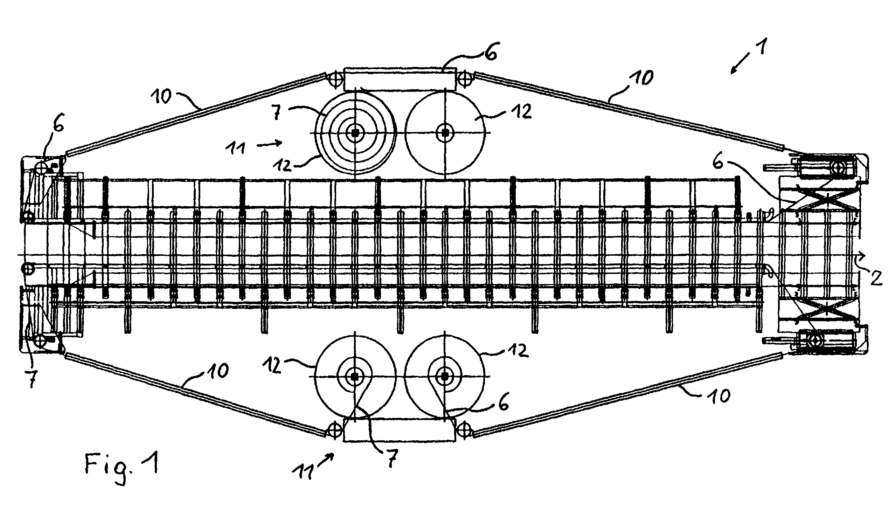

Fig. 1 zeigt eine summarisch mit 1 bezeichnete Doppelbandanlage, die bis auf die im folgenden dargestellten Einzelheiten konventionell aufgebaut ist. Doppelbandanlagen dieser Art sind allgemeiner Stand der Technik, weswegen hier eine detaillierte Darstellung unterbleiben kann. Wesentlich ist, daß in die Doppelbandanlage 1 von der in Fig. 1 linken Seite aus z.B. Sandwichelemente, eingeführt werden, die in der mit 2 bezeichneten Produktionsrichtung durch die Doppelbandanlage 1 hindurchgeführt werden und dabei zwischen einem oberen und einem unteren Band bei festgelegtem Abstand der Bänder und damit festgelegter Maximalhöhe des Plattenmaterials hindurchlaufen. Dabei ist die Doppelbandanlage 1 geheizt, um eine bestimmte Prozeßtemperatur einzustellen, die im allgemeinen geregelt wird.

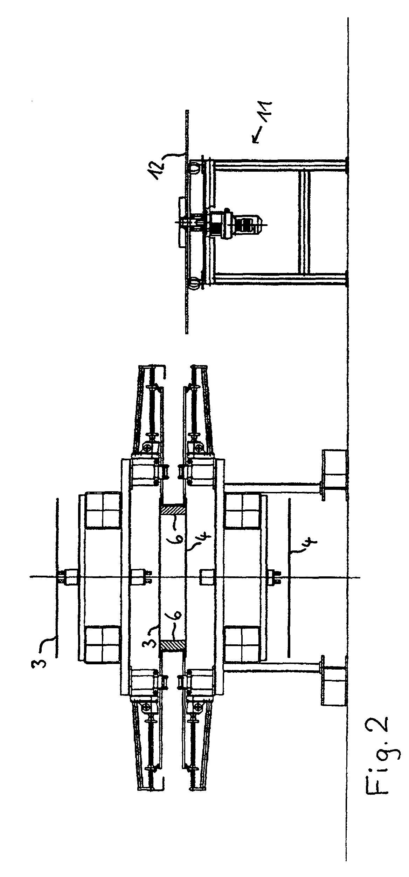

In Fig. 2 erkennt man in der Aufrißdarstellung ein oberes Band 3 und ein unteres Band 4, die als einander zugewandte Trume einen Kanal für Plattenmaterialien zwischen sich begrenzen und im äußeren Bereich, d.h. in Fig. 2 oben und unten zurücklaufen. Dabei sind die Bänder 3 und 4 in synchronisierter Weise motorisch angetrieben.

Zwischen den Bändern 3 und 4 an den seitlichen Begrenzungen des zwischen ihnen gebildeten Kanals sind zwei Dichtketten 6, eingebaut, so daß sie den Kanal in Fig. 2 nach links und rechts begrenzen.

Fig. 1 zeigt an den seitlichen Außenbereichen der Doppelbandanlage angeordnete Rücklaufkanäle bzw. Führungen 10 für die Dichtketten 6 und Dichtkettenmagazine 11 mit kreisscheibenförmigen Plattenablageflächen 12, und zwar jeweils zwei für jedes Magazin 11. In Fig. 2 sind diese Führungen der Übersichtlichkeit halber weggelassen; es ist jedoch ein Dichtkettenmagazin 11 mit Plattenablagefläche 12 und zugehörigem Gestell und Spulmotor dargestellt. Im Normalbetrieb der Doppelbandanlage läuft eine Dichtkette 6 über diese Führungen 10 im äußeren Bereich zurück, während der innere Trum der Dichtkette 6 den Kanal für die Plattenmaterialien begrenzt. Dies ist in Fig. 1 für die obere Dichtkette 6 dargestellt. In Fig. 2 sind rechts und links außen von den Dichtketten Seitenstützkonstruktionen mit Spindeln für die Dichtketten 6 zu sehen. Diese Konstruktionen sind konventionell und für die Erfindung ohne Belang und werden daher nicht näher erläutert.

Insbesondere erkennt man, daß die obere Dichtkette 6 in Fig. 1 oben in der Mitte über den beiden Ablageflächen 12 des Dichtkettenmagazins 11 vorbeiläuft, in der Perspektive der Fig. 2 also seitlich links neben dem Dichtkettenmagazin 11 laufen würde (jedoch nicht eingezeichnet). Demgegenüber zeigt die Darstellung der unteren Dichtkette in Fig. 1 einen Dichtkettenwechsel. Hierbei ist mit 6 die herauszuführende erste Dichtkette bezeichnet und mit 7 die einzuführende zweite Dichtkette. Jede der beiden Dichtketten 6 und 7 liegt zu einem Teil auf jeweils einer Ablagefläche 12 des Dichtkettenmagazins 11. Im Bereich der Führungen oder des Kanals der Doppelbandanlage 1 sind die Dichtketten 6 und 7 miteinander verbunden. Durch Einschalten des Dichtkettentransports der Doppelbandanlage 1 und entsprechendes Mitdrehen zumindest der in Fig. 1 rechten Ablagefläche 12 kann dabei die erste Dichtkette 6 aus der Doppelbandanlage herausgezogen werden, während sie mit ihrem in der Bewegungsrichtung hinteren Ende zuvor an dem in diesem Sinn vorderen Ende der zweiten Dichtkette 7 befestigt wurde. Dadurch zieht das hintere Ende der ersten Dichtkette 6 das vordere Ende der zweiten Dichtkette 7 nach sich zunächst durch die in Fig. 1 linke Führung 10 und dann durch den Kanal der Doppelbandanlage 1 und schließlich durch die in Fig. 1 rechte Führung 10, bis die gesamte erste Dichtkette 6 auf der in Fig. 1 rechten Ablagefläche 12 liegt und die in Fig. 1 linke Ablagefläche 12 leer ist.

Dementsprechend erkennt man auf der in Fig. 1 oberen linken Ablagefläche 12 eine zweite Dichtkette 7, die beim nächsten Dichtkettenwechsel die derzeit in Betrieb befindliche Dichtkette 6 ersetzen soll. Wenn die in Fig. 2 linken und rechten Dichtketten zueinander symmetrisch sind, so können die Ablageflächen mit der herausgeführten Dichtkette von der linken Seite auf den entsprechenden Platz des Dichtkettenmagazins 11 der rechten Seite gesetzt werden und umgekehrt, also beispielsweise vom in Fig. 1 rechten unteren Platz auf den linken oberen und vom rechten oberen auf den linken unteren. Dadurch wird das Umspulen vermieden, das natürlich auch möglich ist und den Transport der Dichtketten vermeidet Wenn die Dichtketten links und rechts in der Doppelbandanlage nicht symmetrisch zueinander sind, so muß umgespult werden, woraufhin eine umgespulte Dichtkette in dem Dichtkettenmagazin 11 den Platz wechselt, also beispielsweise von in Fig. 1 oben rechts nach oben links und von unten rechts nach unten links. Das Umspulen kann dabei während des in Fig. 1 oben skizzierten Normalbetriebs von einem Platz des Dichtkettenmagazins 11 auf den anderen erfolgen.

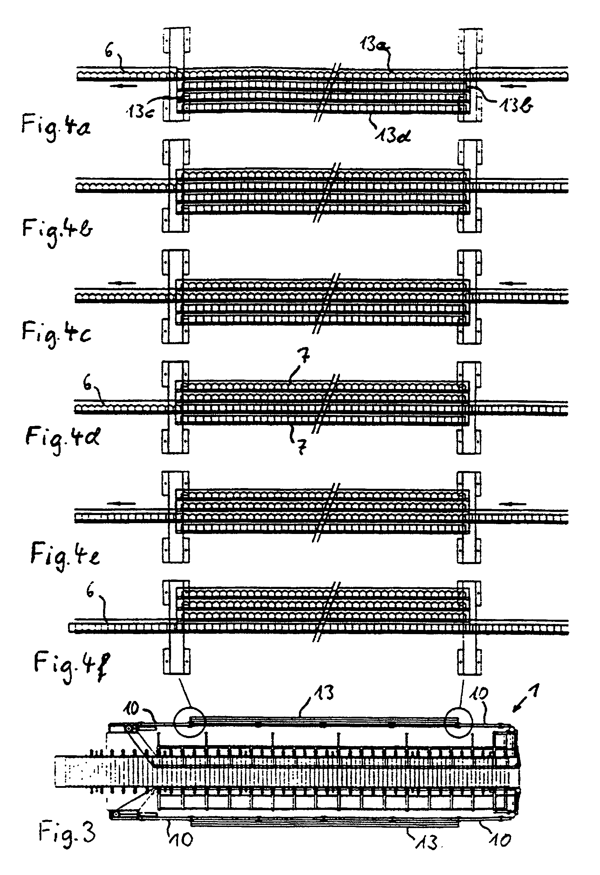

Fig. 3 zeigt ein alternatives Ausführungsbeispiel, das dem Ausführungsbeispiel aus den Figuren 1 und 2 weitgehend entspricht. Die Form der äußeren Führungen 10 und des hier nun mit 13 bezeichneten Dichtkettenmagazins weichen ab. In Fig. 3 erkennt man bereits, daß die Dichtkettenmagazine 13 eine relativ eng neben der Doppelbandanlage 1 angeordnete langgestreckte Form aufweisen. Dementsprechend sind die äußeren Rücklaufkanäle bzw. Führungen 10 gegenüber der Transportrichtung der Doppelbandanlage 1 nicht, wie in den Fig. 1 und 2, gewinkelt.

Die Fig. 4 a - f zeigen jeweils verschiedene Betriebszustände eines solchen Dichtkettenmagazins 13. In Fig. 4 a sind vier einzelne Fächer 13 a - 13 d bezeichnet Im Vergleich der Fig. 4 a - 4 f erkennt man, daß das Dichtkettenmagazin 13 insgesamt quer zur Transportrichtung der Doppelbandanlage 1 so verfahrbar ist, daß jeweils eines dieser Fächer 13 a - 13 d als Rücklaufkanal für die in Betrieb befindliche erste Dichtkette 6 dienen kann. In den jeweils übrigen Fächern, also 13 b - d in Fig. 4 a und beispielsweise 13 a, b, d in Fig. 4 e liegen jeweils Drittelteilstücke der zweiten Dichtkette 7. Beim Dichtkettenwechsel wird nämlich die jeweils herauszuführende Dichtkette nur zu einem Drittel herausgezogen, daraufhin ein Kettenschloß geöffnet, woraufhin das Dichtkettenmagazin 13 seitlich verschoben wird und das nächste Drittel in ein anderes der vier Fächer 13 a - d eingefahren wird. Dabei muß die herauszuführende Dichtkette jeweils drittelweise mit der einzuführenden Dichtkette verbunden werden. Insoweit hat dieses Ausführungsbeispiel gegenüber dem aus den Fig. 1 und 2 den Nachteil, daß mehr Öffnungs- und Schließvorgänge von Kettenschlössern notwendig sind. Andererseits läßt sich die Ausführungsform aus den Fig. 3 und 4 a - f baulich sehr kompakt realisieren und erspart die Umspulvorgänge.

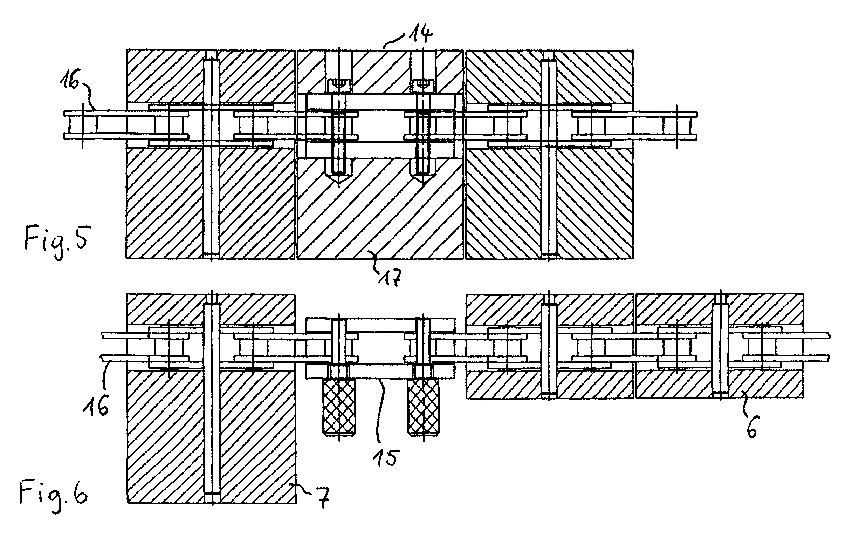

Die Fig. 5 und 6 zeigen jeweils einen Ausschnitt aus einer Dichtkette mit einem Kettenschloß 14 (in Fig. 5) bzw. 15 (in Fig. 6). Man erkennt ohne weiteres, daß die Kettenschlösser im wesentlichen einem Element der Metallgliederkette 16 der übrigen Dichtkette entsprechen. Das Kettenschloß 14 aus Fig. 5 weist zudem, wie die übrigen Glieder der Kette, einen aufmontierten Formblock 17 auf, so es daß sich in seiner äußeren Formgestaltung praktisch nicht von den anderen Gliedern unterscheidet.

In Fig. 6 erkennt man hingegen ein Kettenschloß 15 ohne Formblock, das also nur aus einem Metallglied besteht. Wie auch das Metallglied des Kettenschlosses 14 ist dieses jedoch über Schraubbolzen zu öffnen, in Fig. 5 über Imbusschrauben, in Fig. 6 über gerändelte Schraubköpfe.

In Fig. 5 ist der Fall dargestellt, daß das Kettenschloß 14 eine homogene Dichtkette im Betrieb schließt. Dabei ist es günstig, wenn der Formblock 17 eine möglichst große Homogenität auch an der Stelle des Kettenschlosses 14 herstellt. In Fig. 6 ist jedoch der Fall eingezeichnet, in dem rechts eine erste Dichtkette 6 und links eine zweite Dichtkette 7 vorliegt. In diesem Fall könnte natürlich eines der Schlösser einer der Ketten 6 oder 7 verwendet werden, das vorteilhafterweise ebenfalls jeweils angepaßte Formblöcke aufweist. Jedoch ist es genau so gut möglich, ein Schloß 15 ohne Formblock zu verwenden.

Insgesamt bietet die Erfindung den wesentlichen Vorteil, daß der Dichtkettenwechsel gegenüber der konventionellen Vorgehensweise nicht nur wesentlich beschleunigt werden kann, sondern zudem weitaus bessere Automatisierungsmöglichkeiten bietet. Bis auf die Öffnungs- und Schließvorgänge der Dichtketten bzw. Dichtkettenteilstücke kann der übrige Vorgang mit motorischen Antrieben weitgehend selbsttägig geschehen, insbesondere weil das Durchfädeln aufgrund des sehr viel homogeneren Übergangs zwischen den beiden Dichtketten 6 und 7 sehr viel leichter geschieht als im konventionellen Fall. Für den motorischen Antrieb kann dabei eine Langsamfahrstufe bzw. ein manuell steuerbarer Tippbetrieb der Doppelbandanlage 1 verwendet werden.

## Patentansprüche

1. Verfahren zum Wechseln von Dichtketten (6, 7) einer Doppelbandanlage (1) für Plattenmaterialien,
bei dem eine erste Dichtkette (6) in der Doppelbandanlage (1) geöffnet wird und
eine zweite Dichtkette (7) anstelle der ersten Dichtkette (6) in die Doppelbandanlage (1) eingeführt wird,
**dadurch gekennzeichnet, daß** ein Ende der zweiten Dichtkette (7) mit einem Kettenschloß (14, 15) direkt an einem Ende der ersten Dichtkette (6) befestigt wird und die zweite Dichtkette (7) während des Herausführens der ersten Dichtkette (6) aus der Doppelbandanlage (1) in die Doppelbandanlage eingeführt wird.

2. Verfahren nach Anspruch 1, bei dem das Kettenschloß (14, 15) eine einzelne Kettenteilungslänge aufweist.

3. Verfahren nach Anspruch 2, bei dem das Kettenschloß (14, 15) identisch mit den zum Schließen der Dichtketten (6, 7) in der Doppelbandanlage (1) verwendeten Kettenschlössern ist.

4. Verfahren nach einem der vorstehenden Ansprüche, bei dem die Doppelbandanlage (1) ein Dichtkettenmagazin (11, 13) für nicht in die Doppelbandanlage eingeführte Dichtketten aufweist.

5. Verfahren nach Anspruch 4, bei dem das Dichtkettenmagazin (11, 13) eine im wesentlichen auf der Höhe einer in die Doppelbandanlage (1) eingeführten Dichtkette (6) angeordnete Fläche (12) zum Ablegen einer nicht eingeführten Dichtkette (7) aufweist.

6. Verfahren nach Anspruch 4 oder 5, bei dem die erste Dichtkette (6) in dem Dichtkettenmagazin (11) spiralförmig aufgewickelt wird.

7. Verfahren nach Anspruch 6, bei dem das Dichtkettenmagazin (11) zumindest zwei im wesentlichen kreisförmige Plattenablagefläche (12) aufweist.

8. Verfahren nach Anspruch 6 oder 7, bei dem die erste Dichtkette (6) nach dem Aufwickeln in dem Dichtkettenmagazin (11) umgespult wird und beim nächsten Einführen in die Doppelbandanlage (1) im gleichen Richtungssinn wie beim vorherigen Herausführen eingeführt wird.

9. Verfahren nach einem der vorstehenden Ansprüche, bei dem die Doppelbandanlage (1) beim Ein- und Herausführen von Dichtketten (6, 7) im wesentlichen bei gleicher Geschwindigkeit mitläuft.

10. Verfahren nach einem der vorstehenden Ansprüche, bei dem die erste Dichtkette (6) zu einem Teil ihrer Länge herausgeführt und in dem Dichtkettenmagazin (13) untergebracht wird sowie durch Öffnen eines Kettenschloßes (14, 15) unterteilt wird, wobei dann ein weiterer Teil ihrer Länge herausgeführt wird.

11. Verfahren nach Anspruch 10, bei dem die Teilstücke der ersten Dichtkette (6) nach dem Herausführen in dem Dichtkettenmagazin (13) nebeneinanderliegend (13 a - d) angeordnet werden.

12. Verfahren nach Anspruch 11, bei dem das Dichtkettenmagazin (13) langgestreckte, nebeneinanderliegende Magazinfächer (13 a - d) für Dichtkettenteilstücke aufweist.

13. Verfahren nach Anspruch 12, bei dem eines der Magazinfächer (13 a - d) einen Rücklaufkanal für eine Dichtkette (6) in der Doppelbandanlage (1) bildet.

14. Doppelbandanlage ausgelegt für ein Verfahren nach einem der Ansprüche 4 - 13.

## Claims

1. A method for changing side-sealing chains (6, 7) of a double-belt press (1) for board material, wherein a first sealing chain (6) in said double-belt press (1) is opened, a second sealing chain (7) is inserted instead of said first sealing chain (6) into said double-belt press (1),
**characterized in that** one end of said second sealing chain (7) is secured with a chain link (14, 15) directly to one end of said first sealing chain (6) and said second sealing chain (7) is inserted into said double-belt press (1) whilst extracting said first sealing chain (6) from said double-belt press (1).

2. The method as set forth in claim 1 wherein said chain link (14, 15) has a single chain pitch length.

3. The method as set forth in claim 2 wherein said chain link (14, 15) is identical to the chain links used to close said sealings chains (6, 7) in said double-belt press (1).

4. The method as set forth in any of the preceding claims wherein said double-belt press (1) comprises a sealing chain magazine (11, 13) for sealing chains not inserted in said double-belt press.

5. The method as set forth in claim 4 wherein said sealing chain magazine (11, 13) comprises a surface area (12) substantially arranged at the level of a sealing chain (6) inserted in said double-belt press (1) for placement of a non-inserted sealing chain (7).

6. The method as set forth in claim 4 or 5 wherein said first sealing chain (6) is spirally wound in said sealing chain magazine (11).

7. The method as set forth in claim 6 wherein said sealing chain magazine (11) comprises at least two substantially circular board placement surface areas (12).

8. The method as set forth in claim 6 or 7 wherein said first sealing chain (6) after being wound in said sealing chain magazine (11) is rewound and on next insertion into said double-belt press (1) is inserted in the same direcctional sense as for the previous extraction.

9. The method as set forth in any of the preceding claims wherein said double-belt press (1) runs substantially at the same speed on insertion and extraction of said sealing chains (6, 7).

10. The method as set forth in any of the preceding claims wherein said first sealing chain (6) is extracted over part of its length and accommodated in said sealing chain magazine (13) and is divided by its chain link (14, 15) being opened for subsequent extraction of a further part of its length.

11. The method as set forth in claim 10 wherein the partial lengths of said first sealing chain (6) after extraction are arranged juxtaposed (13 a - d) in said sealing chain magazine (13).

12. The method as set forth in claim 11 wherein said sealing chain magazine (13) comprises elongated juxtaposed magazine compartments (13 a - d) for partial lengths of sealing chains.

13. The method as set forth in claim 12 wherein one of said magazine compartments (13 a - d) forms a return passage for a sealing chain (6) in said double-belt press (1).

14. A double-belt press (1) designed for a method as set forth in any of the claims 4-13.

## Revendications

1. Procédé de changement des chaines d'étanchéité (6, 7) d'une double conformateur (1) pour materiaux de plâque,
avec lequel une première chaine d'étanchéité (6) est ouverte dans le double conformateur (1) et
une deuxième chaine d'étanchéité (7) est introduite dans le double conformateur (1) à la place de la première chaine d'étanchéité (6),
**caractérisé en ce qu'**une extrémité de la deuxième chaine d'étanchéité (7) est fixée directement à une extrémité de la première chaine d'étanchéité (6) avec un joint de chaîne (14, 15) et la deuxième chaine d'étanchéité (7) est introduite dans le double conformateur pendant l'extraction de la première chaine d'étanchéité (6) de le double conformateur (1).

2. Procédé selon la revendication 1, avec lequel le joint de chaîne (14, 15) présente une longueur de pas de chaîne individuelle.

3. Procédé selon la revendication 2, avec lequel le joint de chaîne (14, 15) est identique aux joints de chaîne utilisées pour fermer les chaines d'étanchéité (6, 7) dans le double conformateur (1).

4. Procédé selon l'une des revendications précédentes, avec lequel le double conformateur (1) présente un chargeur de chaines d'étanchéité (11, 13) pour les chaines d'étanchéité qui ne sont pas introduites dans le double conformateur.

5. Procédé selon la revendication 4, avec lequel le chargeur de chaines d'étanchéité (11, 13) présente une surface (12) disposée pour l'essentiel à la hauteur d'une chaine d'étanchéité (6) introduite dans le double conformateur (1) destiné à accueillir une chaine d'étanchéité (7) qui n'est pas encore introduite.

6. Procédé selon la revendication 4 ou 5, avec lequel la première chaine d'étanchéité (6) est enroulée dans le chargeur de chaines d'étanchéité (11) en forme de spirale.

7. Procédé selon la revendication 6, avec lequel le chargeur de chaines d'étanchéité (11) présente au moins deux surfaces d'accueil planes (12) de forme essentiellement circulaire.

8. Procédé selon la revendication 6 ou 7, avec lequel la première chaine d'étanchéité (6) est déroulée après avoir été enroulée dans le chargeur de chaines d'étanchéité (11) et, lors de la prochaine introduction dans le double conformateur (1), est introduite dans le même sens que lors de l'extraction précédente.

9. Procédé selon l'une des revendications précédentes, avec lequel le double conformateur (1) tourne pour l'essentiel à la même vitesse lors de l'introduction et de l'extraction des chaines d'étanchéité (6, 7).

10. Procédé selon l'une des revendications précédentes, avec lequel la première chaine d'étanchéité (6) est extraite sur une partie de sa longueur et pénètre dans le chargeur de chaines d'étanchéité (13) puis est divisée en ouvrant un joint de chaîne (14, 15), une autre partie de sa longueur étant ensuite extraite.

11. Procédé selon la revendication 10, avec lequel les portions de la première chaine d'étanchéité (6) sont disposées les unes à côté des autres (13a - d) dans le chargeur de chaines d'étanchéité (13) après avoir été extraites.

12. Procédé selon la revendication 11, avec lequel le chargeur de chaines d'étanchéité (13) présente des compartiments de chargeur (13a - d) disposés les uns à côté des autres et s'étendant en longueur pour les portions de chaine d'étanchéité.

13. Procédé selon la revendication 12, avec lequel l'un des compartiments du chargeur (13a - d) forme un conduit de retour pour une chaine d'étanchéité (6) dans le double conformateur (1).

14. Double conformateur conçue pour un procédé selon l'une des revendications 4 à 13.
